# EUROPEAN PATENT SPECIFICATION

(11) **EP 2 762 533 B1**
(45) Date of publication and mention of the grant of the patent: **06.05.2020**
(21) Application number: 14153368.7
(22) Date of filing: 31.01.2014
(51) Int. Cl.: C09D 4/06, B41M 5/00, C09D 5/00, C09D 11/00, C09D 133/00, C09D 175/00, C09D 191/00

(54) **Pre-Treatment Coating**
Vorbehandlungsbeschichtung
Revêtement de prétraitement

(30) Priority: 31.01.2013 US 201313755078
(43) Date of publication of application: 06.08.2014
(73) Proprietor: Hewlett-Packard Development Company, L.P., Spring TX 77389 (US)
(72) Inventor: Swei, Jason, San Diego, CA California 92127-1899 (US); Chen, Haigang, San Diego, CA California 92127-1899 (US); Niu, Bor-Jiunn, San Diego, CA California 92127-1899 (US)
(74) Representative: ZBM Patents - Zea, Barlocci & Markvardsen

(56) References cited:
- WO-A1-2011/159274
- JP-A- S5 699 694
- US-A1- 2003 203 134
- US-A1- 2007 237 910
- US-A1- 2010 143 835
- US-A1- 2011 303 113
- US-A1- 2012 034 398

## Description

### BACKGROUND

Inkjet technology has expanded its application to high-speed, commercial and industrial printing, in addition to home and office usage. This technology is a non-impact printing method in which an electronic signal controls and directs droplets or a stream of ink that can be deposited on a wide variety of substrates. Current inkjet printing technology involves forcing the ink drops through small nozzles by thermal ejection or piezoelectric pressure or oscillation onto the surface of a media.

Pre-treatment compositions or coatings can likewise be applied to various media to improve printing characteristics and attributes of an image. Such composition can be substantially colorless and can be formulated to interact with the colorant and/or with polymeric components of certain ink compositions. With the use of such pre-treatment compositions, precipitated colorants deposited on the surface of recording media can provide enhancement of image quality. For example, improved optical density and high speed printing may be achieved with such pre-treatment compositions. However, many pre-treatment formulations that are acceptable in one area are not as acceptable in others, and thus, research and development related to pre-treatment formulations that can produce higher quality print images on the print media surfaces continue to be sought.

US 2012/034398 describes a media which is suitable for high speed web press printing.

WO 2011/159274 describes pre-treatment composition and printing method.

US 2011/303113 describes a printing method for producing durable images.

US 2010/143835 is related to an electrophotographic toner and the preparation method.

JP S56 99694 is related to a record media.

US 2003/203134 describes ink jet media and techniques for modifying the coefficient of friction.

US 2007/237910 relates to a media sheet has a first layer and a second layer.

### BRIEF DESCRIPTION OF THE DRAWINGS

Additional features and advantages of the disclosure will be apparent from the detailed description which follows, taken in conjunction with the accompanying drawings, which together illustrate, by way of example, features of the invention; and, wherein:
FIG. 1 provides a cross-sectional view of a pre-treatment coating on a print medium in accordance with an example of the present disclosure;
FIG. 2 depicts a flow chart of a method in accordance with an example of the present disclosure.

Reference will now be made to several examples that are illustrated herein, and specific language will be used herein to describe the same. It will nevertheless be understood that no limitation of the scope of the disclosure is thereby intended.

### DETAILED DESCRIPTION

It has been recognized that traditional pre-treatment coatings that can provide high quality print images lack durability when used in packaging applications or similar applications that subject the printed images to a high degree of surface contact. As such, it has been discovered that the use of wax particles in pre-treatment coatings can provide excellent durability, thereby preserving the quality of the printed image even with more significant surface to surface contact. Specifically, the present invention relates to a pre-treatment coating according to claims 1 to 7, to a printable medium according to claims 8 to 11 and to a method of providing a durable coating to an uncoated medium according to claims 12 to 13.

It is noted that when discussing the present compositions and methods, each of these discussions can be considered applicable to each of these embodiments, whether or not they are explicitly discussed in the context of that embodiment. Thus, for example, in discussing a wax in a pre-treatment coating, such a wax can also be used in a method of providing a durable coating to a print medium, and *vice versa.*

The pre-treatment coatings according to the present disclosure can be useful for a number of different types of media. However, it is particularly beneficial when used with aqueous-based inkjet inks to print upon porous commercial media. Porous commercial media is sometimes referred to as "open cell" commercial media because the surface is porous and tends to readily absorb ink. One example of such as commercial media is known as "Kraft" media. Such kraft papers are produced from a chemical pulp produced in a "kraft process" or a "sulfate process." With this process, wood is converted into wood pulp and includes almost pure cellulose fibers. This provides a paper having a excellent strength and can be usable in a number of applications including wrapping papers, corrugated fiberboard, and packaging papers. Open cell paper may be bleached to provide a white appearance. Formulating aqueous inkjet ink for printing directly on standard open cell papers can be challenging. The use of the present pre-treatment coatings provide a treated surface that can receive inkjet inks and provide a print that is durable and of high color gamut.

As such, a pre-treatment coating for a print medium can include an evaporable solvent, a matrix, and a wax. The evaporable solvent can be water, another evaporable solvent system, or the like, provided the solvent can be removed by drying, heating, or some other process. According to claim 1, the matrix includes from 50 wt% to 80 wt% of a fixer and from 5 wt% to 20 wt% of a low Tg latex. The wax can be present at from 5 wt% to 20 wt%. In this example, the weight percentages in the matrix and the wax are based on the total amount present in the pre-treatment coating after removal of the solvent, such as water or other solvent system.

In another example, a printable medium can include an uncoated media substrate and a pre-treatment coating applied to the uncoated media substrate to form the printable medium. The pre-treatment coating can include a matrix and wax particles. The matrix can include from 50 wt% to 80 wt% of a fixer,

and from 5 wt% to 20 wt% of a low Tg latex. The wax particles can be present at from 5 wt% to 30 wt%, the wax particles having an average particle size from 100 nm to 100 µm, particularly from 0.5 µm to 50 µm, and at least a portion of the wax particles have a particle size that is greater than an average thickness of the matrix applied to the media substrate.

It is noted that the term "pre-treatment coating" refers to either a composition used to form a coating layer as well as the coating layer itself, the context dictating which is applicable. For example, a pre-treatment coating that includes an evaporable solvent is typically referring to the compositional coating that is applied to a media substrate. Once coated on a media substrate and after the evaporable solvent is removed, the resulting coating layer can also be referred to as a pre-treatment coating.

The relatively high fixer content provides that there will be sufficient fixer at the surface of the porous or open cell media to fix the ink and prevent visually noticeable artifacts such as color bleed. However, it has been found that merely fixing the ink does not provide enough smudge and scratch resistance that is desirable in many commercial applications, such as package printing. For example, the latex provides binding properties to adhere the ink to the substrate and helps prevent smudge. The wax further enhances smudge and scratch resistance by providing a physical barrier between the image and surfaces or objects in proximity to the image. The combination of these pre-treatment ingredients has been found to provide a very durable image suitable for commercial packages, even when used with aqueous inkjet inks.

Generally, the matrix includes the components of the pre-treatment coating except for the wax, and the wax is in the form of wax particles that extend beyond the underlying matrix, as described in greater detail hereinafter. This structure provides durability as the wax particles protect the underlying matrix when the pre-treatment coating contacts other substrates, objects, or the like. Such durability provides retention of the print quality of the printed image, which can be measured by gloss, optical density, color bleed, scratch resistance, coalescence, water smudge, etc.

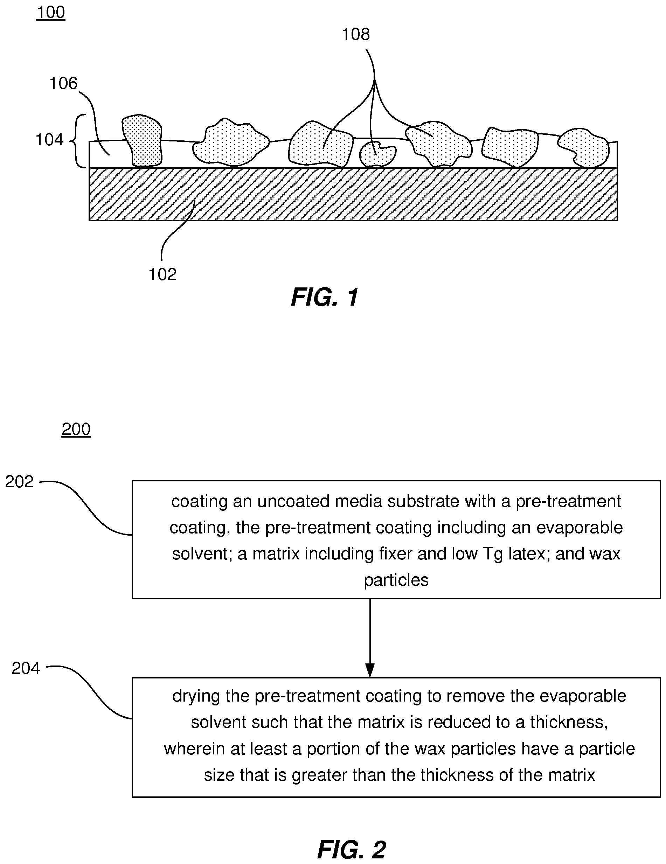

Generally, the wax includes wax particles that when printed on a print medium, the particle size that is greater than the average thickness of the pre-treatment matrix. Turning to FIG. 1, a coated medium 100 can include a print medium 102 coated with a pre-treatment coating 104. The pre-treatment coating can include a matrix 106 embedded with wax particles 108. The wax particles generally extend above the surface of the matrix, though it is not required that all of the wax particles be larger in size than the average thickness of the matrix. For example, the size of at least a portion of the wax particles can be greater than the average thickness of the matrix. In one example, at least 50% of the wax particles can have a particle size greater than the average thickness of the matrix. In one aspect, at least 75% of the wax particles can have a particle size greater than the average thickness of the matrix. In one specific aspect, at least 90% of the wax particles can have a particle size greater than the average thickness of the matrix. In one example, the matrix can have a thickness of 100 nm to 100 µm and the wax can have an average particle size of 100 nm to 100 µm. Though these ranges overlap, it is understood that a portion of the wax particles will be larger in size than the thickness of the matrix.

In further detail regarding the wax particle size, these wax particles can have an average particle size of 100 nm to 100 µm, 0.5 µm to 50 µm, or from 1 µm to 50 µm. In another example, the wax particles can have an average particle size of 5 µm to 50 µm. In still another example, the wax particles can have an average particle size of 5 µm to 12 µm. In one aspect, the wax particles can have an average particle size of 12 µm to 20 µm. In one specific aspect, the wax particles can have an average particle size of about 8 µm. In another aspect, the wax particles can have an average particle size of about 15 µm to 18 µm. As used herein, "particle size" refers to the average cross-section of the particle, e.g. wax particle, when such particle is non-spherical. When particles are non-spherical, the largest diameter sphere that can be fitted within the particle can be considered D1. The smallest diameter sphere that can completely contain the particle can be considered D2. In one example, the "particle size" can be measured as the average of D1 and D2, which is referred to simply as D. Thus, when referring to "particle size" herein, the particle diameter D can be calculated. "Average particle size," on the other hand, refers to a plurality of particles, each having its own particle size, which are collectively averaged.

Additionally, the wax particles can be spread throughout the coating such that the particles have an average spacing S that is at least twice the diameter D of the particles. In one example, the average spacing S is at least 3 times D. In another example, the average spacing S is at least 4 times D.

Additionally the wax particles can be distributed so as to have an area density coverage that is within a specific range. The area density coverage is the percentage of the area of the media covered by the particles. According to this metric, each particle covers a portion of the media that is defined by a cylindrical projection of the particle that is normal to the media. Thus, the area covered would be defined by a circle having the same diameter (D) as the particle. In one example, the area density coverage would be in the range of 0.5% to 30% of the area of the media. In yet a more specific aspect, the area density coverage would be 1% to 10% of the area of the media. Some specific examples of area density coverage would be about 1%, about 4%, about 5% coverage. In general an area coverage density that is above about 30% coverage may begin to adversely impact print quality. An area coverage density below about 0.5% may be insufficient to provide scratch and/or rub resistance of an image printed upon the media.

Generally, the wax particles can be chosen such that the ratio of the wax particle size to the average thickness of the pre-treatment coating plus any printed ink thereon is greater than 1. Such a ratio provides that the wax particles extend above the surface of any printing on the pre-treatment coating, thereby protecting the underlying printed image. In one example, the ratio can range from 10:1 to 1.01:1, and in one aspect, can range from 3:1 to 1.01:1. In another specific aspect, the ratio can range from 2:1 to 1.01:1, or even 1.1:1 to 1.01:1.

The wax can be selected based on various printing factors such as compatibility, particle size, melting point, etc. Typically, waxes are available as wax emulsions. Wax emulsions are commercially available from a number of vendors, for example Keim-Additec, Lubrizol, Michelman, and BYK Chemie. Wax emulsions useful for the present compositions can include but are not limited to: Lubrizol: Liquilube™ 411, Liquilube™ 405, Liquilube™ 488, Liquilube™ 443, Liquilube™ 454; Michelman: ME80825, ME48040, ME98040M1, ME61335, ME90842, ME91240, ML160; Keim-Additec: Ultralube® E-521/20, Ultralube® E-7093, Ultralube® 7095/1, Ultralube® E-8046, Ultralube® D806, Ultralube® E-502V, Ultralube® E-842N: Byk: Aquacer® 2650, Aquacer® 507, Aquacer® 533, Aquacer® 515, Aquacer® 537, Aquaslip™ 671, Aquaslip™ 942; Arkema: Orgasol® 2001 EXD NAT1, 3501 EXD NAT 1; Elementis: Slip-ayd® SL300, Slip-ayd® SL1618, Slip-ayd® 295A, combinations thereof, and the like.

Wax suspended in water includes, but is not limited to, particles of a synthetic wax, a natural wax, a combination of a synthetic wax and a natural wax, a combination of two or more different synthetic waxes, or a combination of two or more different natural waxes, for example. In some examples, the synthetic wax includes, but is not limited to, polyethylene, polypropylene, polybutadiene, polytetrafluoroethylene, polyvinylfluoride, polyvinyldiene fluoride, polychlorotrifluoroethylene, perfluoroalkoxy polymer, perfluoropolyether, polyurethane, polyethylenechlorotrifluoroethylene, polyethylene-vinyl acetate, epoxy resin, silicone resin, polyamide resin, polyamide, or polyester resin. In some examples, the natural wax includes, but is not limited to, carnauba wax, paraffin wax, montan wax, candelilla wax, ouricury wax, sufarcane wax, retamo wax, or beeswax. In one example, the wax can be a polyethylene wax.

In one example, the wax can have a melting point ranging from 60°C to 150°C. Generally, the wax can be present in the pre-treatment coating at a concentration ranging from 5 wt% to 30 wt%. In another example, the wax can be present ranging from 10 wt% to 20 wt%, and in one aspect, 11 wt% to 17 wt%. It is notable that these weight percentages of the wax are based on a total amount present in the pre-treatment coating after removal of any evaporable solvent. Thus, they are intended to be weight percentages by solids once the pre-treatment coating is applied to the media substrate and the evaporable solvent is driven off, i.e. the final wt% on the coated media substrate.

Additionally, the wax emulsions can include compatible binders and dispersants. By compatible, the present waxes can be used without causing aggregation or precipitation of dispersants/binders, particularly over extended periods of time (weeks/months at ambient temperature or days/weeks at elevated temperature such as 40° to 65°C). Incompatibility can manifest itself by increases in wax particle size, phase separation of wax, or creaming at a faster rate than in the absence of destabilizing materials.

As discussed herein, the matrix generally includes the remaining compounds of the pre-treatment coating, but does not include the wax or evaporable solvent. The evaporable solvent is not part of the matrix either, as it is removed from the pre-treatment coating composition after application to the media substrate. The solvent can include or be water, or another aqueous or other solvent system that can be removed after application.

The matrix typically includes a fixer and a latex, and can also include binder and/or surfactant in some examples. Like the wax, it is notable that the matrix weight percentages herein are based on a total amount present in the pre-treatment coating after removal of any evaporable solvent. Thus, the weight percentages are intended to be weight percentages by solids once the pre-treatment coating is applied to the media substrate and the evaporable solvent is driven off, i.e. the final wt% on the coated media substrate, whether discussed in the context of the coating composition or the finished coating.

In claims 1 to 13, the fixer is a polyvalent metal salt. The polyvalent metal salt can be a divalent or a higher polyvalent metallic ion and anion. In one example, the polyvalent metal salt components can be soluble in water. Examples of polyvalent metallic ions include divalent metallic ions, such as Ca²⁺, Cu²⁺, Ni²⁺, Mg²⁺, Zn²⁺ and Ba²⁺; and trivalent metallic ions, such as Al³⁺, Fe³⁺ and Cr³⁺. In one example, the polyvalent metallic ion can be Ca²⁺, Mg²⁺ or Zn²⁺. In one aspect, the polyvalent metallic ions can be Ca²⁺. Examples of anions include Cl⁻, I⁻, Br⁻, NO₃⁻ or RCOO⁻ (where R is H or any hydrocarbon chain). In one example, the polyvalent metal salt anion can be a chloride (Cl⁻) or acetate (CH₃COO⁻). In other examples, the polyvalent metal salt can include divalent or other polyvalent metallic ions and nitrate or carboxylate ions. The carboxylate ions can be derived from a saturated aliphatic monocarboxylic acid having 1 to 6 carbon atoms or a carbocyclic monocarboxylic acid having 7 to 11 carbon atoms. Examples of saturated aliphatic monocarboxylic acid having 1 to 6 carbon atoms may include formic acid, acetic acid, propionic acid, butyric acid, isobutyric acid, valeric acid, isovaleric acid, pivalic acid, and/or hexanoic acid.

In one example, the fixer can be a polyvalent metal salt including calcium chloride, calcium nitrate, magnesium nitrate, magnesium acetate, and/or zinc acetate. In one aspect, the polyvalent metal salt can be calcium chloride or calcium nitrate (CaCI2 or Ca(NO₃)₂). In one additional specific aspect, the polyvalent metal salt can be calcium chloride (CaCl₂).

Generally, the fixer is present in the pre-treatment coating at a concentration ranging from 50 wt% to 80 wt%, based on the solids content after the solvent has been removed. In another example, the fixer can be present in an amount ranging from 50 wt% to 70 wt%, and in one aspect, 60 wt% to 70 wt%. It is understood that these ranges are not intended to be limiting and that the amounts can be adjusted for the desired application. Having a relatively high concentration of fixer has been found to be particularly advantageous with open cell media, such as kraft media. With open cell media, the pre-treatment fluid tends to penetrate the media, leaving a lower percentage of fixer on the surface of the media than would be found with a closed (coated or highly calendered) media. By having a relatively large amount of fixer, this provides for sufficient fixer on the media surface to interact with the ink to be printed thereon.

The matrix can also include a latex. As used herein, "latex" can be used interchangeable with "latex particle" and refer to polymeric masses that are dispersed in a fluid. In one example, the latex particle can be made of polymers and copolymers including acrylic polymers or copolymers, vinyl acetate polymers or copolymers, polyester polymers or copolymers, vinylidene chloride polymers or copolymers, butadiene polymers or copolymers, styrene-butadiene polymers or copolymers, acrylonitrile-butadiene polymers or copolymers, or the like. In another example, the latex particle can include a vinyl acetate-based polymer, an acrylic polymer, a styrene polymer, a styrene-butadiene (SBR)-based polymer, a polyester-based polymer, a vinyl chloride-based polymer, an acid-based polymer, or the like. In another example, the latex particle can be polyacrylates, polyvinyls, polyurethanes, ethylene vinyl acetates, styrene acrylic copolymers, styrene-butadiene polymers or copolymers, polymethacrylates, polyacrylic acids, polymethacrylic acids, or mixtures thereof. In one aspect, the latex particle can be a polymer or a copolymer including acrylic polymers, vinyl-acrylic copolymers, or acrylic-polyurethane copolymers. In another aspect, the latex particle can be cationic acrylate latex.

Generally, the latex particles can have a weight average molecular weight (Mw) of 5,000 to 500,000. In one example, the latex particles can range from 150,000 Mw to 300,000 Mw. In some examples, the average particle size of the latex particles can be from 10 nm to 1 µm and, as other examples, from 10 nm to 500 nm, and in yet other examples, from 50 nm to 250 nm. The particle size distribution of the latex is not particularly limited, and either latex having a broad particle size distribution or latex having a mono-dispersed particle size distribution may be used. It is also possible to use two or more kinds of polymer fine particles each having a mono-dispersed particle size distribution in combination.

According to claims 1 to 13, the Tg of the low Tg latex can range from -25 °C to 100 °C, from -25 °C to 50 °C, and in one specific aspect, can range from -25 °C to 0 °C. Generally, the present latex can function as a binder to assure that inkjet ink is bound to the substrate, which can particularly improve smudge resistance. The glass transition temperature (Tg) parameter can be measured by Differential Scanning Calorimetry (DSC).

The latex particles is included in the matrix or pre-treatment coating at a concentration ranging from 5 wt% to 20 wt%, based on the solids content of the pre-treatment coating after solvent has been removed. In one example, the latex particles can be present in an amount ranging from 5 wt% to 15 wt%, and in one aspect, 10 wt% to 15 wt%. It is understood that these ranges are not intended to be limiting and that the amounts can be adjusted for the desired application.

As mentioned, the matrix can also include a binder. Examples of suitable binders that can be used include polyvinyl alcohols (including water-soluble PVA copolymers such as copolymers of PVA and poly(ethylene oxide) or copolymers of PVA and polyvinylamine, cationic PVAs, acetoacetylated PVAs, and silyl-modified PVA); polyvinyl acetates; polyvinyl pyrrolidones (including copolymers of polyvinyl pyrrolidone and polyvinyl acetate); starch; modified starch (including oxidized and etherified starches); water soluble cellulose derivatives (including carboxymethyl cellulose and hydroxyethyl cellulose); polyacrylamides (including polyacrylamide derivatives and copolymers); casein; gelatin; soybean protein; conjugated diene copolymers (including maleic anhydride resin and styrene-butadiene copolymer); acrylic polymers (including polymers and copolymers of acrylic and methacrylic acids); vinyl polymers (including ethylene-vinyl acetate copolymers); functional group- modified polymers (including those obtained by modifying the above-mentioned polymers with monomers containing functional groups such as carboxyl, amino, amido, and sulfo groups); cationic polymers, including cationic polyamides; aqueous binders of thermosetting resins (including melamine resins and urea resin). In one example, the binder can be starch or modified starch.

The binder, if present, can be included in the pre-treatment coating at a concentration ranging from 5 wt% to 20 wt%, based on the solids content of the pre-treatment coating after solvent has been removed. In one example, the binder can be present in an amount ranging from 5 wt% to 15 wt%, and in one aspect, 10 wt% to 15 wt%. It is understood that these ranges are not intended to be limiting and that the amounts can be adjusted for the desired application.

Further, the matrix can contain surfactants. Non-limiting examples of suitable surfactants include nonionic surfactant, cationic surfactant, and combinations thereof. In one example, the surfactant can be a nonionic surfactant. In one aspect, the surfactant can be a nonionic surfactant including nonionic fluorosurfactant, nonionic acetylenic diol surfactant, nonionic ethoxylated alcohol surfactant, and combinations thereof.

Several commercially available nonionic surfactants that can be used in the formulation of the pre-treatment composition include ethoxylated alcohols such as those from the Tergitol® series (e.g., Tergitol® 15S30, Tergitol® 15S9), manufactured by Dow Chemical; surfactants from the Surfynol® series (e.g. Surfynol® 440 and Surfynol® 465), and Dynol™ series (e.g. Dynol™ 607 and Dynol™ 604) manufactured by Air Products and Chemicals, Inc.; fluorinated surfactants, such as those from the Zonyl® family (e.g., Zonyl® FSO and Zonyl® FSN surfactants), manufactured by E.I. DuPont de Nemours and Company,; Alkoxylated surfactant such as Tego® Wet 510 manufactured from Evonik; fluorinated PolyFox® nonionic surfactants (e.g., PF159 nonionic surfactants), manufactured by Omnova; or combinations thereof. Suitable cationic surfactants that may be used in the pre-treatment composition include long chain amines and/or their salts, acrylated diamines, polyamines and/or their salts, quaternary ammonium salts, polyoxyethylenated long-chain amines, quaternized polyoxyethylenated long-chain amines, and/or combinations thereof.

The surfactant, if present, can be included in the pre-treatment composition at from about 0.05 wt% to about 1.5 wt%. In one example, the surfactant can be present in an amount ranging from about 0.1 wt% to about 1 wt%. In one aspect, the surfactant can be present in an amount ranging from about 0.2 wt% to about 0.6 wt%.

Other additives can be added to the pre-treatment matrix including cross-linkers, defoamers, plasticizers, fillers, stabilizers, dispersants, biocides, optical brighteners, viscosity modifiers, leveling agents, UV absorbers, anti-ozonants, etc. Such additives can be present in the pre-treatment compositions in amounts from 0.01 wt% to 20 wt%. Generally, the cross-linker can cross-link the binder.

Referring to FIG. 2, a method 200 of providing a durable coating to a print medium can include coating 202 an uncoated substrate with a pre-treatment coating, the pre-treatment coating including solvent, a matrix including fixer and low Tg latex, and wax particles. Additional steps include drying 204 the pre-treatment coating to remove solvent such that the matrix is reduced to an average thickness, wherein at least a portion of the wax particles have a particle size that is greater than the average thickness of the matrix. General coating methods include slot-die coating, rod coating such as Mayer rod coating, blade coating, gravure coating, knife-over-roll coating, cascade coating, curtain coating, and the like. Generally the pre-treatment coatings can be applied at a basis weight of 0.1 gsm to 10 gsm. In one example, the basis weight can be from 1 gsm to 5 gsm, and in one aspect, from 1 gsm to 2 gsm.

Generally, during manufacture and subsequent application to a print medium, the present pre-treatment coatings initially include water allowing for processability, which can be removed via drying or over time.

As discussed herein, the pre-treatment compositions of the present disclosure are particularly suitable for use on uncoated media. In one example, the print medium can be an uncoated print medium, such as open cell media.

The present pre-treatment coatings are generally used in conjunction with an inkjet ink. Such inkjet inks generally include a colorant dispersed or dissolved in an ink vehicle. As used herein, "liquid vehicle" or "ink vehicle" refers to the liquid fluid in which a colorant is placed to form an ink. Ink vehicles are well known in the art, and a wide variety of ink vehicles may be used with the systems and methods of the present disclosure. Such ink vehicles may include a mixture of a variety of different agents, including, surfactants, solvents, co-solvents, anti-kogation agents, buffers, biocides, sequestering agents, viscosity modifiers, surface- active agents, water, etc. Though not part of the liquid vehicle *per se,* in addition to the colorants, the liquid vehicle can carry solid additives such as polymers, latexes, UV curable materials, plasticizers, etc.

Generally the colorant discussed herein can include a pigment and/or dye. As used herein, "dye" refers to compounds or molecules that impart color to an ink vehicle. As such, dye includes molecules and compounds that absorb electromagnetic radiation or certain wavelengths thereof. For example, dyes include those that fluoresce and those that absorb certain wavelengths of visible light. Generally, dyes are water soluble. Furthermore, as used herein, "pigment" generally includes pigment colorants, magnetic particles, aluminas, silicas, and/or other ceramics, organo-metallics or other opaque particles. In one example, the colorant can be a pigment.

Typical ink vehicle formulations can include water, and can further include co-solvents present in total at from 0.1 wt% to 40 wt%, depending on the jetting architecture, though amounts outside of this range can also be used. Further, additional non-ionic, cationic, and/or anionic surfactants can be present, ranging from 0.01 wt% to 10 wt%. In addition to the colorant, the balance of the formulation can be purified water, and the inkjet ink can optionally include a latex.

Consistent with the formulation of this disclosure, various other additives may be employed to enhance the properties of the ink composition for specific applications. Examples of these additives are those added to inhibit the growth of harmful microorganisms. These additives may be biocides, fungicides, and other microbial agents, which are routinely used in ink formulations. Examples of suitable microbial agents include, but are not limited to, NUOSEPT® (Nudex, Inc.), UCARCIDE™ (Union carbide Corp.), VANCIDE® (R.T. Vanderbilt Co.), PROXEL® (ICI America), and combinations thereof.

Sequestering agents, such as EDTA (ethylene diamine tetra acetic acid), may be included to eliminate the deleterious effects of heavy metal impurities, and buffer solutions may be used to control the pH of the ink. From 0 wt% to 2 wt%, for example, can be used. Viscosity modifiers and buffers may also be present, as well as other additives known to those skilled in the art to modify properties of the ink as desired. Such additives can be present at from 0 wt% to 20 wt%.

Additionally, it is to be understood that this disclosure is not limited to the particular process steps and materials disclosed herein because such process steps and materials may vary somewhat. It is also to be understood that the terminology used herein is used for the purpose of describing particular examples only. The terms are not intended to be limiting because the scope of the present disclosure is intended to be limited only by the appended claims and equivalents thereof.

It is be noted that, as used in this specification and the appended claims, the singular forms "a," "an," and "the" include plural referents unless the context clearly dictates otherwise.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a *de facto* equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 to about 5" should be interpreted to include not only the explicitly recited values of about 1 to about 5, but also include individual values and sub-ranges within the indicated range. Thus, included in this numerical range are individual values such as 2, 3, and 4 and sub-ranges such as from 1-3, from 2-4, and from 3-5, etc. Additionally, a numerical range with a lower end of "0" can include a sub-range using "0.1" as the lower end point.

### EXAMPLES

The following examples illustrate the pre-treatment compositions and methods that are presently known. However, it is to be understood that the following are only exemplary or illustrative of the application of the principles of the present compositions and methods. Numerous modifications and alternative pre-treatment compositions and methods may be devised by those skilled in the art without departing from the spirit and scope of the present compositions and methods. The appended claims are intended to cover such modifications and arrangements. Thus, while the present pre-treatment compositions and methods have been described above with particularity, the following examples provide further detail in connection with what are presently deemed to be acceptable embodiments.

### Example 1 - Pre-treatment Coatings

Pre-treatment compositions were prepared by admixing the components according to Tables 1A, 1B, and 1C in water (as the solvent). These compositions were then coated onto uncoated print media via rod coating. The pre-treatment coating had a basis weight of 2 gsm. After coating, the media was dried to remove the solvent, providing the wt% listed in Tables 1A 1B, and 1C.

### Pre-treatment coatings 1. 2 and 6 are comparative examples.

**Table 1A**

| Ingredients | Pre-treat Coating 1 (wt%) | Pre-treat Coating 2 (wt%) | Pre-treat Coating 3 (wt%) | Pre-treat Coating 4 (wt%) | Pre-treat Coating 5 (wt%) |
|---|---|---|---|---|---|
| CaCl₂ | 74.26 | 64.66 | 64.66 | 74.26 | 74.26 |
| Low Tg Latex (-22 °C Tg) | -- | -- | 8.26 | 9.90 | -- |
| Low Tg Latex (5 °C Tg) | -- | -- | -- | -- | 9.90 |
| Low Tg Latex (35 °C Tg) | -- | -- | -- | -- | -- |
| Starch | 24.75 | 21.55 | 12.93 | -- | -- |
| Wax (particle size 15-18 µm) | -- | 12.93 | 12.93 | 14.85 | 14.85 |
| Wax (particle size 8 µm) | -- | -- | -- | -- | -- |
| Surfactant | 0.50 | 0.43 | 0.43 | 0.50 | 0.50 |
| Defoamer | 0.50 | 0.43 | 0.43 | 0.50 | 0.50 |

**Table 1B**

| Ingredients | Pre-treat Coating 6 (wt%) | Pre-treat Coating 7 (wt%) | Pre-treat Coating 8 (wt%) | Pre-treat Coating 9 (wt%) | Pre-treat Coating 10 (wt%) |
|---|---|---|---|---|---|
| CaCl₂ | 87.21 | 78.13 | 74.26 | 70.75 | 74.26 |
| Low Tg Latex (-22 °C Tg) | -- | -- | -- | -- | -- |
| Low Tg Latex (5 °C Tg) | 11.63 | 10.42 | 9.90 | 9.43 | - |
| Low Tg Latex (35 °C Tg) | -- | -- | -- | -- | 9.90 |
| Starch | -- | -- | -- | -- | -- |
| Wax (particle size 15-18 µm) | -- | -- | -- | -- | 14.85 |
| Wax (particle size 8 µm) | -- | 10.42 | 14.85 | 18.87 | -- |
| Surfactant | 0.58 | 0.52 | 0.50 | 0.47 | 0.50 |
| Defoamer | 0.58 | 0.52 | 0.50 | 0.47 | 0.50 |

**Table 1C**

| Ingredients | Pre-treat Coating 11 (wt%) | Pre-treat Coating 12 (wt%) | Pre-treat Coating 13 (wt%) |
|---|---|---|---|
| CaCl₂ | 78.13 | 74.26 | 70.75 |
| Low Tg Latex (-22 °C Tg) | -- | -- | -- |
| Low Tg Latex (5°C Tg) | -- | -- | -- |
| Low Tg Latex (35 °C Tg) | 10.42 | 9.90 | 9.43 |
| Starch | -- | -- | -- |
| Wax (particle size 15-18 µm) | -- | -- | -- |
| Wax (particle size 8 µm) | 10.42 | 14.85 | 18.87 |
| Surfactant | 0.52 | 0.50 | 0.47 |
| Defoamer | 0.52 | 0.50 | 0.47 |

### Example 2 - Data

The pre-treatment compositions of Example 1 were tested for differing print quality characteristics as listed in Table 2.

**Table 2**

| Pre-treatment Coating | Image Quality | Dry Durability | Wet Durability |
|---|---|---|---|
| 1 | 5 | 1 | 1 |
| 2 | 5 | 5 | 1 |
| 3 | 5 | 5 | 2 |
| 4 | 5 | 5 | 4 |
| 5 | 5 | 5 | 4 |
| 6 | 5 | 1 | 4 |
| 7 | 5 | 4 | 4 |
| 8 | 5 | 5 | 4 |
| 9 | 5 | 5 | 4 |
| 10 | 5 | 5 | 4 |
| 11 | 5 | 4 | 4 |
| 12 | 5 | 5 | 4 |
| 13 | 5 | 5 | 4 |

Image Quality was measured by a visual assessment of bleed and coalescence. Good image quality is defined by not having any bleed or coalescence during printing. Dry Durability was measured by a visual assessment of damage to the print area from a Sutherland® Rub tester. The dry durability was tested using a 4 lb weight and 100 cycles of rubbing on the printed area. Wet Durability was measured by a visual assessment of damage to the print area using a Taber® 5750 Linear Abraser and a wet TexWipe®. The wet durability was tested using a wet TexWipe® for 1 cycle of rubbing on the printed area.

Pre-treatment Coatings 1 to 13 above set forth various combinations of fixer, polymeric binders, and latexes. Pre-treatment Coating 1 showed poor image quality without addition of wax. Pre-treatment Coating 2 showed better durability with the addition of a wax. Pre-treatment Coating 3 showed a slight improvement in durability over Pre-treatment Coating 2 with the addition of a latex. Pre-treatment Coatings 4 and 5 demonstrated excellent results using a low Tg latex and an increased amount of wax. Pre-treatment Coating 6 showed poor dry durability without the addition of a wax. Pre-treatment Coating 7 demonstrated that adding wax particles improved durability, but not to the extent of other formulations, e.g., Pre-treatment Coatings 4 and 5. Pre-treatment Coatings 8 to 10 and 12 to 13 demonstrated excellent results using a fixer, low Tg latex, and a wax. Pre-treatment Coating 11 demonstrated good results but the reduction in wax lowered its dry durability.

## Claims

1. A pre-treatment coating, comprising:
an evaporable solvent;
a matrix, including:
from 50 wt% to 80 wt% of a fixer which is a polyvalent metal salt, and
from 5 wt% to 20 wt% of a latex; and
a wax at from 5 wt% to 30 wt%,
wherein weight percentages of the matrix and the wax are based on a total amount that is present in the resulting coating layer after removal of the evaporable solvent; and, wherein the latex has a Tg range from -25 °C to 100 °C (measured by Differential Scanning Calorimetry, DSC); and
wherein the wax is in form of wax particles; and wherein at least a portion of the wax particles have a particle size that is greater than an average thickness of the matrix applied to the media substrate.

2. The pre-treatment coating of claim 1, wherein the matrix further includes from 5 wt% to 20 wt% of a binder based on a total amount of solids that is present in the resulting coating layer after removal of solvent, wherein the binder is selected from the group of polyvinyl alcohols, polyvinyl pyrrolidones, water soluble cellulose derivatives, polyacrylamides, casein, gelatin, soybean protein, cationic polymers, aqueous binders of thermosetting resins, starch or modified starch, and mixtures thereof.

3. The pre-treatment coating of claim 1, wherein the latex is selected from the group of polyacrylates, polyvinyls, polyurethanes, ethylene vinyl acetates, styrene acrylic copolymers, styrene-butadiene polymers or copolymers, polymethacrylates, polyacrylic acids, polymethacrylic acids, and mixtures thereof.

4. The pre-treatment coating of claim 1, wherein the latex is an acrylate-urethane latex.

5. The pre-treatment coating of claim 1, wherein the wax is selected from the group of polyethylene, polypropylene, polyamide, polytetrafluoroethylene, carnuba, and mixtures thereof.

6. The pre-treatment coating of claim 1, wherein the matrix further comprises a surfactant.

7. The pre-treatment coating of claim 1, wherein the evaporable solvent is water.

8. A printable medium, comprising:
an uncoated media substrate; and
a coating layer applied to the uncoated media substrate to form the printable medium, the coating layer, comprising:
a matrix, including:
from 50 wt% to 80 wt% of a fixer which is a polyvalent metal salt, and
from 5 wt% to 20 wt% of a latex; and
wax particles present at from 5 wt% to 30 wt%, wherein at least a portion of the wax particles have a particle size that is greater than an average thickness of the matrix applied to the media substrate; and wherein the latex has a Tg range from -25 °C to 100 °C (measured by Differential Scanning Calorimetry, DSC).

9. The printable medium of claim 8, wherein at least 50% of the wax particles have a particle size greater than the average thickness of the matrix.

10. The printable medium of claim 8, wherein an average size of wax particles to average thickness of the matrix is at a ratio from 10:1 to 1.01:1.

11. The printable medium of claim 8, wherein the uncoated media substrate is an open cell medium.

12. A method of providing a durable coating to an uncoated print medium, comprising:
coating an uncoated media substrate with a pre-treatment coating, the pre-treatment coating including:
an evaporable solvent,
a matrix including:
from 50 wt% to 80 wt% of fixer which is a polyvalent metal salt, and
from 5 wt% to 20 wt% of a latex, and
from 5 wt% to 30 wt% of wax particles; and
drying the pre-treatment coating to remove the evaporable solvent such that the matrix is reduced to an average thickness, wherein at least a portion of the wax particles have a particle size that is greater than the average thickness of the matrix; and wherein the latex has a Tg range from -25 °C to 100 °C (measured by Differential Scanning Calorimetry, DSC).

13. The method of claim 12, wherein at least 50% of the wax particles have a particle size greater than the average thickness of the matrix.

## Patentansprüche

1. Vorbehandlungsbeschichtung, die Folgendes umfasst:
ein verdampfbares Lösungsmittel;
eine Matrix, einschließlich:
von 50 Gew.-% bis 80 Gew.-% eines Fixiermittels, das ein mehrwertiges Metallsalz ist, und von 5 Gew.-% bis 20 Gew.-% eines Latex; und
eines Wachses in einer Menge von 5 Gew.-% bis 30 Gew.-%, wobei die Gewichtsprozente der Matrix und des Wachses auf einer Gesamtmenge basieren, die in der resultierenden Beschichtungslage nach Entfernung des verdampfbaren Lösungsmittels vorhanden ist; und,
wobei der Latex einen Tg-Bereich von -25 °C bis 100 °C (gemessen durch Differential-Raster-Kalorimetrie (*differential scanning calorimetry -* DSC)) aufweist; und
wobei das Wachs in Form von Wachsteilchen vorliegt; und
wobei wenigstens ein Abschnitt der Wachsteilchen eine Teilchengröße aufweist, die über einer durchschnittlichen Dicke der auf das Mediensubstrat aufgebrachten Matrix liegt.

2. Vorbehandlungsbeschichtung nach Anspruch 1, wobei die Matrix ferner von 5 Gew.-% bis 20 Gew.-% eines Bindemittels, basierend auf einer Gesamtmenge an Feststoffen, die in der resultierenden Beschichtungslage nach Entfernung des Lösungsmittels vorhanden ist, einschließt, wobei das Bindemittel aus der Gruppe ausgewählt ist, die aus Polyvinylalkoholen, Polyvinylpyrrolidonen, wasserlöslichen Cellulosederivaten, Polyacrylamiden, Kasein, Gelatine, Sojabohnenprotein, kationischen Polymeren, wässrigen Bindemitteln aus wärmehärtbaren Harzen, Stärke oder modifizierter Stärke und Mischungen davon besteht.

3. Vorbehandlungsbeschichtung nach Anspruch 1, wobei der Latex aus der Gruppe ausgewählt ist, die aus Polyacrylaten, Polyvinylen, Polyurethanen, Ethylenvinylacetaten, Styrol-Acrylcopolymeren, Styrol-Butadienpolymeren oder -copolymeren, Polymethacrylaten, Polyacrylsäuren, Polymethacrylsäuren und Mischungen davon besteht.

4. Vorbehandlungsbeschichtung nach Anspruch 1, wobei der Latex ein Acrylat-Urethanlatex ist.

5. Vorbehandlungsbeschichtung nach Anspruch 1, wobei das Wachs aus der Gruppe von Polyethylen, Polypropylen, Polyamid, Polytetrafluorethylen, Carnuba und Mischungen davon ausgewählt ist.

6. Vorbehandlungsbeschichtung nach Anspruch 1, wobei die Matrix ferner ein Tensid umfasst.

7. Vorbehandlungsbeschichtung nach Anspruch 1, wobei das verdampfbare Lösungsmittel Wasser ist.

8. Bedruckbares Medium, das Folgendes umfasst:
ein ungestrichenes Mediensubstrat; und
eine Beschichtungslage, die auf das ungestrichene Mediensubstrat aufgebracht wird, um das bedruckbare Medium auszubilden, wobei die Beschichtungslage Folgendes umfasst:
eine Matrix, einschließlich:
von 50 Gew.-% bis 80 Gew.-% eines Fixiermittels, das ein mehrwertiges Metallsalz ist, und
von 5 Gew.-% bis 20 Gew.-% eines Latex; und
Wachsteilchen, die in einer Menge von 5 Gew.-% bis 30 Gew.-% vorhanden sind, wobei wenigstens ein Abschnitt der Wachsteilchen eine Teilchengröße aufweist, die über der durchschnittlichen Dicke der auf das Mediensubstrat aufgebrachten Matrix liegt; und
wobei der Latex einen Tg-Bereich von -25 °C bis 100 °C (gemessen durch Differential-Raster-Kalorimetrie (DSC)) aufweist.

9. Bedruckbares Medium nach Anspruch 8, wobei wenigstens 50 % der Wachsteilchen eine Teilchengröße haben, die über der durchschnittlichen Dicke der Matrix liegt.

10. Bedruckbares Medium nach Anspruch 8, wobei die durchschnittliche Größe der Wachsteilchen zu der durchschnittlichen Dicke der Matrix in einem Verhältnis von 10:1 bis 1,01:1 steht.

11. Bedruckbares Medium nach Anspruch 8, wobei das ungestrichene Mediensubstrat ein offenzelliges Medium ist.

12. Verfahren zum Bereitstellen einer dauerhaften Beschichtung für ein ungestrichenes Druckmedium, das Folgendes umfasst:
Beschichten eines ungestrichenen Mediensubstrats mit einer Vorbehandlungsbeschichtung, wobei die Vorbehandlungsbeschichtung Folgendes einschließt:
ein verdampfbares Lösungsmittel,
eine Matrix, die Folgendes einschließt:
von 50 Gew.-% bis 80 Gew.-% eines Fixiermittels, das ein mehrwertiges Metallsalz ist, und
von 5 Gew.-% bis 20 Gew.-% eines Latex; und
von 5 Gew.-% bis 30 Gew.-% von Wachsteilchen; und
Trocknen der Vorbehandlungsbeschichtung, um das verdampfbare Lösungsmittel derart zu entfernen, dass die Matrix auf eine durchschnittliche Dicke reduziert wird, wobei wenigstens ein Abschnitt der Wachsteilchen eine Teilchengröße aufweist, die über der durchschnittlichen Dicke der Matrix liegt; und
wobei der Latex einen Tg-Bereich von -25 °C bis 100 °C (gemessen durch Differential-Raster-Kalorimetrie (DSC)) aufweist.

13. Verfahren nach Anspruch 12, wobei wenigstens 50 % der Wachsteilchen eine Teilchengröße aufweisen, die über der durchschnittlichen Dicke der Matrix liegt.

## Revendications

1. Revêtement de prétraitement, comprenant :
un solvant évaporable ;
une matrice, comportant :
de 50 % en poids à 80 % en poids d'un fixateur qui est un sel métallique polyvalent,
et de 5 % en poids à 20 % en poids d'un latex ; et
une cire à raison de 5 % en poids à 30 % en poids,
les pourcentages en poids de la matrice et de la cire étant basés sur une quantité totale qui est présente dans la couche de revêtement obtenue après élimination du solvant évaporable ; et le latex possédant une plage de Tg de -25 °C à 100 °C (mesurée par analyse calorimétrique différentielle, DSC) ; et la cire étant sous forme de particules de cire ; et au moins une partie des particules de cire présentant une taille de particules qui est supérieure à une épaisseur moyenne de la matrice appliquée au substrat de supports.

2. Revêtement de prétraitement selon la revendication 1, dans lequel la matrice comporte en outre de 5 % en poids à 20 % en poids d'un liant sur la base d'une quantité totale de solides qui est présente dans la couche de revêtement obtenue après élimination du solvant, le liant étant choisi dans le groupe composé des alcools polyvinyliques, des pyrrolidones polyvinyliques, des dérivés de la cellulose solubles dans l'eau, des polyacrylamides, de la caséine, de la gélatine, de la protéine de soja, des polymères cationiques, des liants aqueux de résines thermodurcissables, de l'amidon ou de l'amidon modifié, et de leurs mélanges.

3. Revêtement de prétraitement selon la revendication 1, dans lequel le latex est choisi dans le groupe composé de polyacrylates, de polyvinyles, de polyuréthanes, d'acétate de vinyle-éthylène, de copolymères acryliques de styrène, de polymères ou copolymères de styrène-butadiène, de polyméthacrylates, d'acides polyacryliques, d'acides polyméthacryliques, et de leur mélanges.

4. Revêtement de prétraitement selon la revendication 1, dans lequel le latex est un latex d'acrylate-uréthane.

5. Revêtement de prétraitement selon la revendication 1, dans lequel la cire est choisie dans le groupe composé de polyéthylène, de polypropylène, de polyamide, de polytétrafluoroéthylène, de carnauba, et de leur mélanges.

6. Revêtement de prétraitement selon la revendication 1, dans lequel la matrice comprend en outre un tensioactif.

7. Revêtement de prétraitement selon la revendication 1, dans lequel le solvant évaporable est de l'eau.

8. Support imprimable, comprenant :
un substrat de supports non revêtu ; et
une couche de revêtement appliquée au substrat de supports non revêtu pour former le support imprimable, la couche de revêtement comprenant :
une matrice, comportant :
de 50 % en poids à 80 % en poids d'un fixateur qui est un sel métallique polyvalent, et
de 5 % en poids à 20 % en poids d'un latex ; et
des particules de cire présentes à raison de 5 % en poids à 30 % en poids, au moins une partie des particules de cire présentant une taille de particules qui est supérieure à une épaisseur moyenne de la matrice appliquée au substrat de supports ; et le latex possédant une plage de Tg de -25 °C à 100 °C (mesurée par analyse calorimétrique différentielle, DSC).

9. Support imprimable selon la revendication 8, dans lequel au moins 50 % des particules de cire présentent une taille de particule supérieure à l'épaisseur moyenne de la matrice.

10. Support imprimable selon la revendication 8, dans lequel une taille moyenne des particules de cire relativement à l'épaisseur moyenne de la matrice se situe à un rapport de 10:1 à 1.01:1.

11. Support imprimable selon la revendication 8, dans lequel le substrat de supports non revêtu est un support à cellule ouverte.

12. Procédé de fourniture d'un revêtement durable à un support d'impression non revêtu, comprenant :
le revêtement d'un substrat de supports non revêtu au moyen d'un revêtement de prétraitement, le revêtement de prétraitement comportant :
un solvant évaporable ; une matrice comportant :
de 50 % en poids à 80 % en poids de fixateur qui est un sel métallique polyvalent, et
de 5 % en poids à 20 % en poids d'un latex ; et
de 5 % en poids à 30 % en poids de particules de cire ; et
le séchage du revêtement de prétraitement pour éliminer le solvant évaporable de telle sorte que la matrice est réduite à une épaisseur moyenne, au moins une partie des particules de cire présentant une taille de particule qui est supérieure à l'épaisseur moyenne de la matrice ; et le latex possédant une plage de Tg de -25 °C à 100 °C (mesurée par analyse calorimétrique différentielle, DSC).

13. Procédé selon la revendication 12, dans lequel au moins 50 % des particules de cire présentent une taille de particule supérieure à l'épaisseur moyenne de la matrice.
